# EUROPEAN PATENT SPECIFICATION

(11) **EP 4 544 329 B1**
(45) Date of publication and mention of the grant of the patent: **15.10.2025**
(21) Application number: 24740515.2
(22) Date of filing: 28.06.2024
(51) Int. Cl.: G02B 1/04

(54) **CONTACT LENSES AND CONTACT LENS FORMULATIONS WITH REDUCED RIPPLING**
KONTAKTLINSEN UND KONTAKTLINSENFORMULIERUNGEN MIT REDUZIERTER RISSNEIGUNG
LENTILLES DE CONTACT ET FORMULATIONS DE LENTILLES DE CONTACT À DÉFORMATION RÉDUITE

(30) Priority: 30.06.2023 GB 202310007
(43) Date of publication of application: 30.04.2025
(73) Proprietor: CooperVision International Limited, Fareham PO15 5RL (GB)
(72) Inventor: PISKORCZYK, Katarzyna, Eastleigh Hampshire SO53 4LY (GB); MITCHELL, William, Eastleigh Hampshire SO53 4LY (GB); MORSLEY, David, Eastleigh Hampshire SO53 4LY (GB); SIMPSON, Laura, Eastleigh Hampshire SO53 4LY (GB); GIBSON, Ian, Eastleigh Hampshire SO53 4LY (GB)
(74) Representative: Abel & Imray LLP
(86) International application number: PCT/GB2024/051683
(87) International publication number: WO 2025/003697

(56) References cited:
- EP-A1- 1 955 842
- GB-A- 2 623 152
- US-A1- 2014 018 465
- US-A1- 2016 054 475

## Description

The present invention relates to a polymerizable formulation including triphenylphosphine for use in manufacturing contact lenses, and contact lenses incorporating a polymeric matrix formed from said polymerizable formulation. In particular, the invention relates to polymerizable formulations that have been found to impart advantageous properties to hydrogel contact lenses, such as reduced surface rippling.

### BACKGROUND

Silicone hydrogel contact lenses have been developed that have favourable lens properties such as a high water content, low contact angle, and a high oxygen permeability (Dk). However, when certain polymerizable compositions are cast moulded into silicone hydrogel contact lenses surface rippling can be observed, especially when cast moulding silicone hydrogel contact lenses in polypropylene (PP) moulds. It has been found that surface rippling is particularly acute when contact lenses are cast from polymerizable compositions having a relative high proportion of high molecular weight siloxane components. US 2016/054475 A1 discloses in Table 2 (P2) a polymerizable composition comprising: a. 49 wt% of a polymerizable siloxane component (SiO 2 and SiGMA), with 39.4 wt% of the polymerizable siloxane content being di-functional siloxane (SiO 2); b. 47.5 wt% N,N-dimethylacrylamide (DMA); and c. 0.5 wt% triphenylphosphine (TPP), that produced a cloudy polymeric lens body, which would not be acceptable for use as a contact lens.

There remains a need to reduce the surface ripping of silicone hydrogel contact lenses whilst maintaining favourable lens properties.

### SUMMARY OF THE INVENTION

In a first aspect, the present invention provides a silicone hydrogel contact lens formulation, comprising:
a. at least 40% (wt/wt) of a polymerizable siloxane component, wherein at least 50% (wt/wt) of the polymerizable siloxane content is di-functional siloxanes having a molecular weight of at least 5,000 daltons, especially at least 8,000 daltons;
b. at least 30% (wt/wt) of hydrophilic N-vinyl amide monomer(s); and
c. at least 0.10% (wt/wt) triphenylphosphine (TPP).

In addition, the silicone hydrogel contact lens formulations of the invention typically contain further polymerizable monomers, oligomers and/or pre-polymers, one or more crosslinkers and one or more polymerization initiators.

It has been found that by including at least 0.10% (wt/wt) TPP in contact lens formulations, comprising: (a.) at least 40% (wt/wt) of a polymerizable siloxane component, wherein at least 50% (wt/wt) of the polymerizable siloxane content is di-functional siloxanes having a relatively high molecular weight, i.e. of at least 5,000 daltons, especially at least 8,000 daltons, and (b.) at least 30% (wt/wt) of hydrophilic N-vinyl amide monomer(s), the resultant formulation is resistant to surface rippling compared to similar formulations that do not include TPP, but the formulation maintains favourable lens properties, such as a high water content, low contact angle, and a high oxygen permeability (Dk).

In a second aspect, the invention provides a silicone hydrogel contact lens, formed from the polymerization of the formulation of the first aspect of the invention. Thus, the polymeric lens material of the silicone hydrogel contact lens of the second aspect of the invention comprises the polymeric product of polymerizing a formulation comprising:
a. at least 40% (wt/wt) of a polymerizable siloxane component, wherein at least 50% (wt/wt) of the polymerizable siloxane content is di-functional siloxanes having a molecular weight of at least 5,000 daltons, especially at least 8,000 daltons;
b. at least 30% (wt/wt) of hydrophilic N-vinyl amide monomer(s); and
c. at least 0.10% (wt/wt) triphenylphosphine (TPP).

In a third aspect, the invention provides the use of TPP to improve the surface properties of a contact lens prepared from a formulation comprising:
a. at least 40% (wt/wt) of a polymerizable siloxane component, wherein at least 50% (wt/wt) of the polymerizable siloxane content is di-functional siloxanes having a molecular weight of at least 5,000 daltons, especially at least 8,000 daltons; and
b. at least 30% (wt/wt) of hydrophilic *N*-vinyl amide monomer(s).

Advantageously, TPP is used in an amount of at least 0.10% (wt/wt) based on the total weight of the formulation in the third aspect of the invention.

Advantageously, in each of the first, second and third aspects of the invention, at least 20% (wt/wt) of the polymerizable siloxane content is mono-functional siloxanes having a molecular weight of less than 3000 daltons.

Formulations of the invention have been found to reduce the amount of surface rippling present on cast moulded contact lenses compared to the lenses cast from otherwise identical polymerizable formulations that lack TPP. A reduction in surface rippling is particularly marked in silicone hydrogel contact lenses that have been cast moulded in the polypropylene (PP) moulds. The addition of TPP in the polymerizable formulations from which the lenses are formed has been found not to deleteriously affect properties such as water content, contact angle and oxygen transmissibility (Dk) of the resulting cast-moulded lenses compared to those cast from polymerizable formulations that lack TPP.

### DETAILED DESCRIPTION

The present disclosure will be more fully understood and further advantages will become apparent when reference is made to the following detailed description of embodiments of the present disclosure. The invention will be described in further detail with particular reference to the formulations of the first aspect of the invention, hereinafter referred to as "formulations of the invention". However, it is to be understood that as the contact lenses of the second aspect of the invention are obtainable from polymerizing the formulations of the first aspect of the invention, hereinafter referred to as "contact lenses of the invention" and constituents of the formulations of the first aspect of the invention will, therefore, be present in polymerized form in the polymeric lens material of the contact lenses of the second aspect of the invention. Likewise, contact lenses that have been found to particularly benefit from the use of TPP to improve the surface properties in accordance with the third aspect of the invention, are those having the characteristics described herein for lenses of the second aspect of the invention and/or those obtained from polymerization of formulations having the characteristics described herein for formulations of the first aspect of the invention. Thus, constituents of the formulations of the first aspect of the invention will be present in polymerized form in the polymeric lens material of the contact lenses in which TPP is used in accordance with the third aspect of the invention. Features of the formulations or lenses, or components thereof, or features of the use of TPP (depending on context) that are referred to herein can be combined with any combination of previously-described or subsequently-described features, unless a particular combination of features is mutually exclusive, or if context indicates otherwise. Further, as used in this specification, the singular forms "a," "an," and "the" include plural referents (e.g. at least one or more) unless the context clearly dictates otherwise. Thus, for example, reference to "a contact lens" includes a single lens as well as two or more of the same or different lenses.

The inclusion of at least 40% (wt/wt) of siloxanes of which at least 50% are high molecular weight di-functional siloxanes of at least 5,00 daltons, especially 8,000 daltons, together with 30% (wt/wt) N-vinyl amide hydrophilic monomer(s) in the formulations of the invention has been found to provide contact lenses with an advantageously high water content, high surface wettability, and high oxygen permeability (Dk). The optional inclusion of additional non-siloxane hydrophobic monomers, especially hydroxybutyl methacrylate and/or isobornyl methacrylate has been found to enhance the mechanical strength of the resulting lenses.

The present disclosure is based on the further discovery that it is possible to provide contact lenses, and their respective formulations, that are both resistant to surface rippling and have favourable lens properties, when at least 0.10% (wt/wt) TPP is included in the polymerizable formulation from which the contact lens is produced. Other comparable formulations, without TPP, have been found to exhibit surface rippling. Surface rippling is an undesirable property for a contact lens as surface rippling can cause discomfort for the wearer. Furthermore, surface rippling may reduce the optical properties of the contact lens. Therefore, formulations with little or no surface rippling are favourable. Contact lenses formed from formulations with a high viscosity, such as a viscosity higher than 250 mm2/s at 25 °C, for example a viscosity higher than 300 mm2/s at 25 °C, have been found to be particularly susceptible to surface rippling. Likewise, contact lenses formed from formulations comprising a high proportion of high molecular weight siloxane components, such as formulations in which at least 40% (wt/wt) are polymerizable siloxane components of which polymerizable siloxane content at least 50% (wt/wt) is di-functional siloxanes having a molecular weight of at least 5,000 daltons, especially at least 8,000 daltons, have been found to be particularly susceptible to surface rippling. The inclusion of substantial amounts of high molecular weight siloxanes, e.g. greater than 20 wt% based on the weight of the polymerizable formulation of siloxanes having a viscosity of 300 mm2/s or more at 25 °C, has been found to lead to the overall formulation having relatively high viscosity, e.g. a viscosity of 250 mm2/s or more at 25 °C. Including TPP in such formulations has been found to be effective in preventing or reducing surface rippling. The polymerizable constituents of the formulations of the invention are typically incorporated into the contact lens of the invention.

References herein to an amount of an ingredient or component present in a formulation expressed in terms of weight percent (i.e. % (wt/wt)) are based on the amount of all formulation ingredients excluding diluents and/or solvents that are not incorporated into the polymeric lens material of the finished contact lens. Thus, for example, the amount of TPP in a formulation made by mixing together 0.5 parts TPP, 40 parts siloxane component, 30 parts of hydrophilic N-vinyl amide monomers, 4.5 parts of other active ingredients (e.g. polymerization initiator, tinting agent, oxygen scavenger, etc.) and 25 parts organic solvent and/or water (for a total of 100 parts) is 0.67% (wt/wt). As used herein a "component" of a formulation refers collectively to all ingredients of a particular type. For example, if a formulation comprises 20% (wt/wt) of a first siloxane monomer and 25% of a second siloxane monomer and no other siloxanes, the formulation can be described as comprising 45% (wt/wt) of a siloxane component.

The polymerizable formulations of the present invention include triphenylphosphine (TPP; CAS #: 603-35-0). TPP is a common organophosphorus compound which is used in the synthesis of organic and organometallic compounds and an intermediate to make pharmaceuticals, phosphonium salts, and other phosphorus compounds.

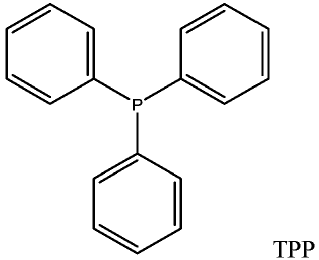

The silicone hydrogel contact lens formulations of the invention include at least 0.10% (wt/wt) TPP. The TPP can be present in the polymerizable formulation in an amount of at least 0.15% (wt/wt), such as at least 0.20%, especially at least 0.25 %. For example, TPP can be present in the polymerizable formulation in an amount from about 0.15% (wt/wt) to about 2.0% (wt/wt), such as from 0.20% (wt/wt) to 1.0% (wt/wt), typically in an amount from about 0.25% (wt/wt) to about 1.0% (wt/wt).

The contact lens formulations of the invention are silicone hydrogel contact lens formulations comprising:
a. at least 40% (wt/wt) of a polymerizable siloxane component, wherein at least 50% (wt/wt) of the polymerizable siloxane content is di-functional siloxanes having a molecular weight of at least 5,000 daltons, especially at least 8,000 daltons; and
b. at least 30% (wt/wt) of hydrophilic *N*-vinyl amide monomer(s); and
c. at least 0.10% (wt/wt) of TPP, for example from about 0.20% (wt/wt) to about 2% (wt/wt) TPP.

A "silicone hydrogel" refers to a crosslinked polymeric material having a three-dimensional polymer network (i.e., polymer matrix) that is insoluble in water, but contains at least 10 percent by weight of water in its polymer matrix when fully hydrated. A "silicone hydrogel" is obtained by polymerization of a polymerizable composition comprising at least one silicone-containing component, typically at least one silicone-containing monomer or at least one silicone-containing pre-polymer or at least one cross-linkable silicone-containing pre-polymer.

The polymerizable contact lens formulations of the first aspect of the invention are suitable for forming silicone hydrogel contact lenses. Polymerizable formulations suitable for use in preparing silicone hydrogel contact lens bodies are well known in the art. In addition to TPP, a polymerizable siloxane component and hydrophilic N-vinyl amide monomer(s), the silicone hydrogel contact lens formulations of the first aspect of the invention may include other components suitable for forming a contact lens body. The polymerizable formulations typically include a crosslinker and a polymerization initiator. The polymerizable formulations may include additional polymerizable monomers, oligomers and/or pre-polymers.

Typically, silicone hydrogel contact lenses are formed through free-radical propagated reactions involving the polymerization of terminal ethylenically unsaturated groups, also referred to herein as "polymerizable groups". Exemplary polymerizable groups include (meth)acryl, (meth)acrylamide, allyl and vinyl and styrenyl groups. As used herein, a "vinyl-containing monomer" is any non-siloxane monomer that has a single polymerizable carbon-carbon double bond (i.e., a vinyl group) present in its molecular structure, where the carbon-carbon double bond of the vinyl group is attached to an sp3 hybridized carbon atom. A vinyl group is less reactive than the carbon-carbon double bond present in an acrylate or a methacrylate polymerizable group under free radical polymerization. The term "(meth)acrylamide" refers to methacrylamide and/or acrylamide. The term "(meth)acrylate" refers to methacrylate and/or acrylate. The term "terminal (meth)acryl group" refers to one (meth)acryl group at one of two ends of the main chain (or backbone) of an organic compound. An "N-vinyl amide monomer" refers to an amide compound having a vinyl group CH=CH2 that is directly attached to the nitrogen atom of the amide group.

A "monomer" is a molecule having one or more polymerizable groups that can react together with other monomers that are the same or different to form a larger polymer or copolymer chain or three-dimensional matrix in a polymerization process. A monomer having two or more polymerizable groups can be referred to as a "cross-linking agent", as described further below. The term "monomer" encompasses macromonomers and polymerizable oligomers, i.e. a polymerizable molecule that contains one or more chains of repeating units such as polymerizable polysiloxanes; thus there is no size-constraint (i.e. maximum molecular weight) of the monomer unless indicated otherwise. The term "polymer" refers a material formed by polymerizing and/or crosslinking one or more monomers.

As used in this application, the term "molecular weight" of a polymeric material, including components comprising multiple siloxane units, refers to the absolute number average molecular weight (in units of daltons), for example determined by GPC using polystyrene standards or by 1H NMR end-group analysis, unless otherwise noted specifically. An "oligomer" is a compound that consists of 2 to 10 repeating units which could be derived, actually or conceptually, from monomers. A pre-polymer is a partially polymerized polymer comprising multiple monomeric units, typically more than 10, reacted to an intermediate-molecular mass state that retains the ability to continue reacting to fully cure into a higher molecular mass polymeric material.

The silicone hydrogel contact lens formulations of the invention may include other hydrophilic monomers in addition to the N-vinyl amide-containing monomers and may also include hydrophobic monomers.

As used herein, a "hydrophilic monomer" refers to a silicone-free monomer in which at least 50 grams of the monomer are fully soluble in 1 litre of water at 20 °C (i.e., ~ 5% soluble in water) as determined visibly using a standard shake flask method.

The silicone hydrogel contact lens formulation comprises one or more hydrophilic N-vinyl amide-containing monomer in an amount of at least 30% (wt/wt), such as in an amount of at least 35% (wt/wt), especially in an amount of at least 37% (wt/wt). The formulation may additionally include other hydrophilic monomers such as hydrophilic vinyl ether-containing monomers. The total amount of hydrophilic monomers in the formulation of the first aspect of the invention is typically no more than 55% (wt/wt), such as no more than 50% (wt/wt).

In some examples, the hydrophilic N-vinyl amide-containing monomers can be selected from N-vinyl-N-methyl acetamide (VMA), or N-vinyl pyrrolidone (NVP), or N-vinyl formamide, or N-vinyl acetamide, or N-vinyl-N-ethyl acetamide, or N-vinyl isopropylamide, or N-vinyl caprolactam, or N-vinyl-N-ethyl formamide, or any combination thereof. In some examples, the hydrophilic vinyl amide-containing monomer consists of VMA or NVP, or a combination of VMA and NVP. The vinyl ether-containing monomers can be selected from 1,4-butanediol vinyl ether (BVE), or ethylene glycol vinyl ether (EGVE), or diethylene glycol vinyl ether (DEGVE), or 1,4-cyclohexanedimethanol vinyl ether (CHDMVE), or a poly(ethylene glycol) vinyl ether having from 4 to 10 ethylene glycol units, or a poly(ethylene glycol) vinyl ether having more than 10 ethylene glycol units, or any combination thereof. In some examples, the vinyl ether-containing monomer can be a poly(ethylene glycol) vinyl ether having at least 1, 2, or 3 ethylene glycol units and up to 4, 6, 8, or 10 ethylene glycol units. One or more vinyl-containing monomers, in addition to the hydrophilic N-vinyl amide-containing monomers and hydrophilic vinyl ether-containing monomers, may be included in the polymerizable formulations of the invention described herein. For example, vinyl monomers having a vinyl ester or allyl ester polymerizable group may be included in the formulations of the invention in addition to the N-vinyl amide-containing monomers and vinyl ether-containing monomers. The hydrophilic monomer may be a (meth)acrylate or (meth)acrylamide group-containing hydrophilic monomer, examples of which include 2-hydroxyethyl methacrylate (HEMA), 4-hydroxybutyl acrylate glycerol methacrylate, 2-hydroxyethyl methacrylamide, ethoxyethyl methacrylamide (EOEMA), polyethyleneglycol monomethacrylate, methacrylic acid (MA) and acrylic acid.

The formulation of the first aspect of the invention includes at least one N-vinyl amide hydrophilic monomer in an amount of at least 30% (wt/wt), especially in an amount of at least 35% (wt/wt). The formulations of the first aspect of the invention typically include no more than 55% (wt/wt) of N-vinyl amide hydrophilic monomers, such as less than 50% (wt/wt) of N-vinyl amide hydrophilic monomers. The formulation of the first aspect of the invention may include N-vinyl amide hydrophilic monomers in an amount of from 35 to 55%, especially from 37 to 50%. The formulation of the first aspect of the invention may include N-methyl N-vinyl acetamide in an amount of from 30 to 55%, such as from 35 to 50%, especially from 37 to 50%.

Where more than one hydrophilic monomer is included in the formulations of the invention, advantageously at least 70% or 80% by weight of the hydrophilic monomers have a solubility in water of ≥ 20%. In a specific example, 100% of the hydrophilic vinyl-containing monomer in the polymerizable formulation has a solubility in water of ≥ 10%. The hydrophilic vinyl-containing monomer typically has a molecular weight of about 75 to about 500, and more typically about 75 to 250.

The formulations of the invention may optionally include hydrophobic monomers that lack siloxane groups. The term "hydrophobic monomer", as used herein, refers to a monomer that lacks siloxane groups and which is less than 5% soluble in water at 20 °C as determined using a standard shake flask method.

Hydrophobic monomers may be (meth)acrylate group-containing hydrophobic monomers. As used herein, a "hydrophobic acrylate-containing monomer" is any non-siloxane monomer that has a single polymerizable acrylate group (e.g. methyl methacrylate, acrylamide, etc.). In a specific example, the hydrophobic acrylate-containing monomer has a polymerizable methacrylate group. Numerous suitable acrylate-containing monomers are known in the field. Exemplary hydrophobic acrylate-containing monomers include methyl acrylate, isopropyl acrylate, cyclohexyl acrylate, methyl methacrylate (MMA), butyl acrylate, tert-butyl methacrylate (tBMA), perfluorohexylethylthiocarbonylaminoethyl methacrylate, isobornyl methacrylate (IBM), trifluoroethyl methacrylate, hexafluoroisopropyl methacrylate, hexafluorobutyl methacrylate, 2-hydroxybutyl methacrylate (HOB), 2-hydroxypropyl methacrylate (HPMA), and ethylene glycol methyl ether methacrylate (EGMA). Favoured non-siloxane hydrophobic monomers include hydroxybutyl methacrylate, isobornyl methacrylate or a combination of hydroxybutyl methacrylate and isobornyl methacrylate. A silicone hydrogel contact lens formulation may comprise an acrylate-containing hydrophobic monomer to further enhance mechanical strength and/or stiffness of the lens, or confer other desired properties.

Hydrophobic monomers that lack siloxane groups are not restricted to (meth)acrylate group-containing monomers and may comprise vinyl or other ethylenically unsaturated reactive groups. Further examples of hydrophobic monomers include vinyl acetate, vinyl propionate, vinyl butyrate, styrene, chloroprene, vinyl chloride, vinylidene chloride, acrylonitrile, and methacrylonitrile.

The polymerizable formulation may comprise from about 2% to about 20% (wt/wt), such as 4% to 16% (wt/wt) especially 6% to 12% (wt/wt) of a non-siloxane hydrophobic monomer component. From 2 to 20% (wt/wt), especially from 5 to 15% (wt/wt) of the formulation may be hydroxybutyl methacrylate, isobornyl methacrylate or a combination of hydroxybutyl methacrylate and isobornyl methacrylate.

A "siloxane monomer", as used herein, refers to a monomer having at least one siloxane group. The siloxane monomers may comprise a terminal acrylate or methacrylate group. (Meth)acrylate-containing siloxane monomers that can be used in the formulations of the invention described herein are well-known in the field. The siloxane monomers may include mono-functional (meth)acrylate-containing siloxanes, di-functional (meth)acrylate-containing siloxane or comprise a combination of mono- and di-functional (meth)acrylate-containing siloxane monomers. In examples where the (meth)acrylate-containing siloxane monomers consist of one or more mono-functional (meth)acrylate-containing siloxane monomers (i.e. it does not contain any multi-functional (meth)acrylate-containing siloxane monomers), the polymerizable formulation will typically further comprise a (meth)acrylate-containing cross-linking agent, described further below. In a specific example, the (meth)acrylate-containing siloxane monomer has one or more polymerizable methacrylate groups. Various non-limiting examples of suitable acrylate-containing siloxane monomers include 3-[tris(trimethylsiloxy)silyl]propyl methacrylate ("TRIS"), 3-methacryloxy-2-hydroxypropyloxy) propylbis(trimethylsiloxy)methylsilane ("SiGMA"), methyldi(trimethylsiloxy)sylylpropylglycerolethyl methacrylate ("SiGEMA"), and monomethacryloxypropyl functional polydimethylsiloxanes such as MCR-M07 and MCS-M11, all available from Gelest (Morrisville, PA, USA).

The silicone hydrogel contact lens formulations of the invention comprise a polymerizable siloxane component in an amount of at least 40% (wt/wt), such as in an amount of at least 42% (wt/wt), especially in an amount of at least 45% (wt/wt). The polymerizable siloxane component typically constitutes no more than 60% (wt/wt) of the formulation, for example no more than 55% (wt/wt) of the formulation.

The silicone hydrogel contact lens formulation may include at least one mono-functional siloxane monomer, for example, having a molecular weight of less than 3000 daltons. At least 10% (wt/wt) of the siloxane content may be mono-functional siloxanes having a molecular weight of less than 3000 daltons. Advantageously, at least 20% (wt/wt) of the siloxane content is mono-functional having a molecular weight of less than 3000 daltons. The formulation may comprise between 10 and 30 wt% mono-functional siloxane monomer(s), for example, between 10 and 30 wt% mono-functional siloxane monomer(s) having a molecular weight of less than 3000 daltons. The mono-functional siloxanes typically have a molecular weight of at least 200 daltons.

In one example, the mono-functional siloxane monomer may comprise a (meth)acrylate-containing siloxane monomer represented by formula (I), 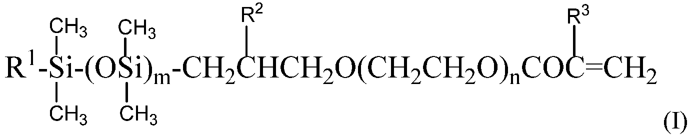 where m is an integer from 3 to 10, n is an integer from 0 to 10, R¹ is an alkyl group having 1 to 4 carbon atoms, R² is hydrogen or a methyl group, and R³ is hydrogen or a methyl group. In a further specific example, the acrylate-containing siloxane monomer is represented by formula I wherein R¹ is a butyl group, R² is hydrogen, R³ is a methyl group, m is 4, and n is 1. Methods of making siloxane monomers represented by formula (I) are described in U.S. Publ. no. 2009/0299022.

In another example, the mono-functional siloxane monomer may comprise a (meth)acrylate-containing siloxane monomer represented by formula (II), 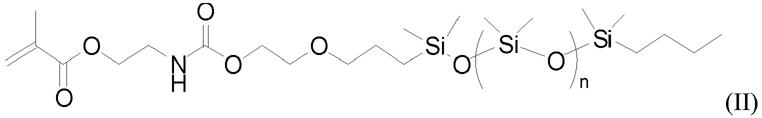 where n is an integer from about 10 to 25, especially from 10 to 20. Siloxane monomers of formula II and other suitable monomers are described in U.S. Pat. No. 6,867,245 and U.S. Pat. No. 6,310,169.

Examples of suitable commercially available mono-functional siloxane monomers include 2-propenoic acid, 2-methyl-,2-[3-(9-butyl-1,1,3,3,5,5,7,7,9,9-decamethylpentasiloxane-1-yl)propoxy]ethyl ester, X-22-1622 / KF-1622 available from Shin-Etsu Chemical Co., Ltd., Tokyo, Japan (CAS # 1052075-57-6), the methacryloxypropyl terminated poly(dimethyl) siloxane FMM Shin-Etsu Silicones of America, Akron, Ohio, USA (CAS # 697234-76-7) and 3-methacryloxy-2-hydroxypropyloxy propylbis(trimethylsiloxy)methylsilane SiGMA.

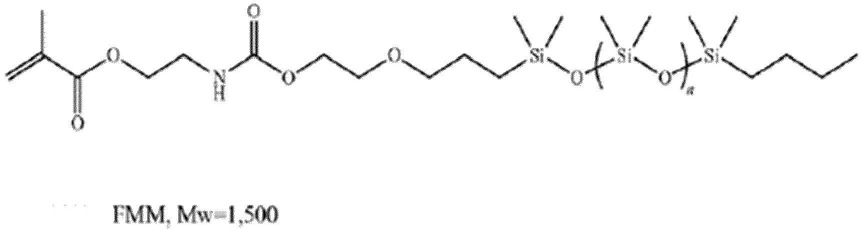

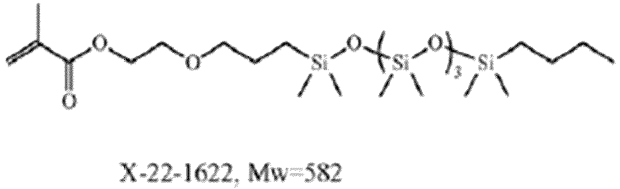

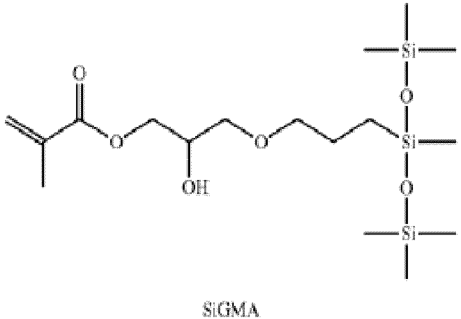

The silicone hydrogel contact lens formulation includes at least one di-functional siloxane having a molecular weight of at least 5,000 daltons, for example at least 6,500 daltons, especially at least 8,000 daltons. The di-functional siloxanes may include or consist of di-functional (meth)acrylate-containing siloxane monomers, especially di-functional (meth)acrylate-containing siloxanes having a molecular weight of at least 5,000 daltons, for example at least 6,500 daltons, especially at least 8,000 daltons. The di-functional siloxanes typically have molecular weight of less than 25,000 daltons, such as a molecular weight of less than 20,000 daltons, especially a molecular weight of less than 15,000 daltons. It has been found that including siloxanes having higher molecular weights can result in formulations that have an unacceptably high viscosity. The silicone hydrogel contact lens formulation may include at least one di-functional siloxane having a molecular weight of from 5,000 to 25,000 daltons, for example at least one di-functional siloxane having a molecular weight of from 6,500 to 20,000 daltons, especially at least one di-functional siloxane having a molecular weight of at least 8,000 to 15,000 daltons. At least 50% (wt/wt) of the siloxane content is di-functional siloxanes, especially di-functional (meth)acrylate-containing siloxanes, having a molecular weight of at least 5,000 daltons. At least 50% (wt/wt) of the siloxane content may be di-functional siloxanes, especially di-functional (meth)acrylate-containing siloxanes, having a molecular weight of at least 6,500 daltons. Advantageously, at least 50% (wt/wt) of the siloxane content are di-functional siloxanes, especially di-functional (meth)acrylate-containing siloxanes, having a molecular weight of at least 8,000 daltons. The formulation may comprise between 20 and 45% (wt/wt) di-functional siloxane, for example, between 20 and 40% (wt/wt) di-functional siloxane, especially di-functional (meth)acrylate-containing siloxanes. The formulation may comprise between 20 and 45% (wt/wt) di-functional siloxane, especially di-functional (meth)acrylate-containing siloxanes, having a molecular weight of at least 5,000 daltons, for example, between 20 and 40% (wt/wt) di-functional siloxane, especially di-functional (meth)acrylate-containing siloxanes, having a molecular weight of at least 5,000 daltons. The formulation may comprise between 15 and 45% (wt/wt) di-functional siloxane, especially di-functional (meth)acrylate-containing siloxanes, having a molecular weight of at least 8,000 daltons, for example, between 20 and 45% (wt/wt) or between 20 and 40% (wt/wt) di-functional siloxane, especially di-functional (meth)acrylate-containing siloxanes, having a molecular weight of at least 8,000 daltons. It has been found that the inclusion of TPP is particularly advantageous in formulations that include high amounts of high molecular weight siloxanes, such as formulations comprising at least 20% (wt/wt), especially at least 25% (wt/wt), of siloxanes having a molecular weight of at least 5,000 daltons, especially at least 8,000 daltons.

In one example, the di-functional siloxane monomer may comprise a (meth)acrylate-containing siloxane monomer represented by formula (III), 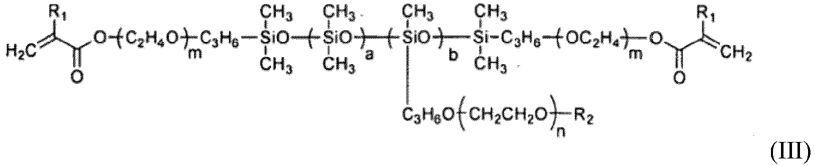 wherein R₁ is selected from either hydrogen or a methyl group; R₂ is selected from either hydrogen or a C₁₋₄ hydrocarbon group; m represents an integer of from 0 to 10; n represents an integer of from 4 up to about 15, 25, or 100; a and b represent integers of 1 or more; a+b is equal to 20-500; b/(a+b) is equal to 0.01-0.22; and the configuration of siloxane units includes a random configuration.

For example, di-functional siloxane monomer, M5A, is represented by formula (III) where R1 is methyl, R2 is methyl, m is 0, n is about 7, a is about 75, and b is about 10. M5A has a molecular weight of between 8,000 and 11,000 daltons.

Other suitable di-functional siloxane monomers are represented by formula (IV): 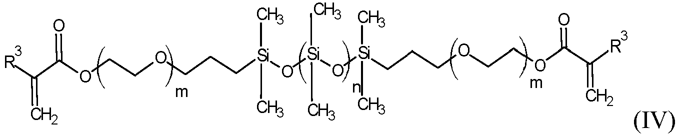 wherein R³ is selected from either hydrogen or a methyl group, m represents an integer from 0 to 10, and n represents an integer from 1 to 500. In a specific example, the di-functional siloxane monomer is a methacryloxypropyl-terminated polydimethylsiloxane represented by formula (IV) where R³ is a methyl group, m is 0, and n is an integer from 40 to 60 having a Mw of 4500 to 5500 is available from Gelest (Morrisville, PA, USA) and is referred to as "DMS-R18" from the manufacturer. Additional suitable methacryloxypropyl-terminated polydimethylsiloxanes include DMS-R22 and DMS-R31, also available from Gelest.

Yet another suitable di-functional siloxane monomer is represented by formula (V), 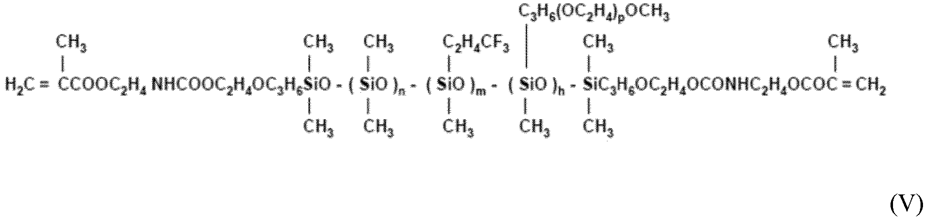 wherein n is an integer of about 100 to 150, m and p are both integers of about 5 to 10, and h is an integer of about 2 to 8. Methods of making compounds of formula (V) are described in U.S. Pat. No. 6,867,245, incorporated herein by reference. An example of a suitable siloxane monomer represented by formula (V) is (α-ω)-Bis(methacryloyloxyethyl iminocarboxy ethyloxy-propyl)-poly(dimethylsiloxane)-poly(trifluoropropylmethylsiloxane)-poly (co-methoxy-poly(ethyleneglycol)propylmeth-ylsiloxane) (M3U) where n is 121, m is 7.6, h is 4.4, and the molecular weight is from 12,000 to 20,000 daltons, typically about 12,800 daltons. Additional (meth)acrylate-containing siloxane monomers that can be used in the formulations of the invention described herein are known in the field (see e.g. U.S. Pat. No. 7,572,841, U.S. Pat. No. 2006/0063852, and U.S. Pat. No. 5,998,498, each incorporated herein by reference).

In one example, the siloxane monomers may comprise a combination of a mono-functional (meth)acrylate-containing siloxane monomer and a di-functional (meth)acrylate-containing siloxane monomer. In one such example, the mono-functional (meth)acrylate-containing siloxane monomer has a molecular weight of less than 3,000, 2,000, or 1,000 daltons, and the di-functional acrylate-containing siloxane monomer has a molecular weight of at least 5,000, 6,500 or 8,000 daltons. In a specific example, the mono-functional (meth)acrylate-containing siloxane monomer has a molecular weight of from about 250 to about 1000 daltons, and the di-functional acrylate-containing siloxane monomer has a molecular weight of from about 5,000 to about 16,000 daltons. In a further specific example, the mono-functional (meth)acrylate-containing siloxane monomer has a molecular weight of from about 500 to about 1000 daltons, and the di-functional (meth)acrylate-containing siloxane monomer has a molecular weight of from about 5,000 to about 12,000 daltons.

The silicone hydrogel contact lens formulations of the invention typically comprise one or more polymerization initiators, i.e., the formulations can comprise an initiator, or can comprise an initiator component comprising two or more polymerization initiators or a combination of polymerization initiators, synergists and activators. The term "initiator" refers to a chemical that initiates a crosslinking/polymerizing reaction. The initiator is typically a free radical initiator that forms radicals that initiate radical propagated polymerization reactions. Polymerization initiators that may be included in the formulations of the invention include, for example, azo compounds, or organic peroxides, or both. The initiator may be a photoinitiator that is activated on exposure to actinic radiation, such as UV light, or a thermal initiator that is activated on exposure to heat. Initiators that can be present in the polymerizable formulations include, for example, benzoin ethyl ether, or benzyl dimethyl ketal, or alpha, alpha-diethoxyacetophenone, or 2,4,6-trimethylbenzoyl diphenyl phosphine oxide, or benzoin peroxide, or t-butyl peroxide, or azobisisobutyronitorile, or azobisdimethylvaleronitorile, or any combination thereof. UV photoinitiators can include, for example, phosphine oxides such as diphenyl (2,4,6-trimethyl benzoyl) phosphine oxide, or benzoin methyl ether, or 1-hydroxycyclohexylphenyl ketone, or Darocur (available from BASF, Florham Park, N.J., USA), or Irgacur (also available from BASF), or any combination thereof. Advantageously the polymerization initiator is a thermal initiator. Examples of suitable thermal initiators include 2,2'-azobis-2-methyl propanenitrile abbreviated as "AIBN" (VAZO-64 from E.I. DuPont de Nemours & Co., Wilmington, Del., USA), 2,2'-azobis(2,4-dimethylpentanenitrile) (VAZO-52) and 1,1'-azo bis(cyanocyclohexane) (VAZO-88 also from E.I. DuPont). The polymerization initiator or initiator component can be present in the silicone hydrogel contact lens formulations of the invention in an amount from about 0.1% (wt/wt) to about 1.5% (wt/wt), or from about 0.2% (wt/wt) to about 1.0% (wt/wt), especially from about 0.2 to about 0.8% (wt/wt). The formulation of the first aspect of the invention is optionally a thermally cured formulation comprising at least one thermal initiator. Thermal curing or actinic curing methods are well-known to a person skilled in the art.

The silicone hydrogel contact lens formulation may further comprise a cross-linking agent. A cross-linking agent can react with functional groups on two or more polymer chains to bridge one polymer to another. As used herein, a "cross-linking agent" is any compound having a molecular weight of less than about 2,000 daltons, typically less than 700 daltons with two or more polymerizable groups. As used herein, "acrylate-containing cross-linking agent" has at least two polymerizable acrylate groups, and no other type of polymerizable group. A "vinyl-containing cross-linking agent" has at least two polymerizable vinyl groups, and no other type of polymerizable group. The vinyl-containing cross-linking agents, as well as the acrylate-containing cross-linking agents, typically can have a molecular weight of less than 1,500, 1,000, 500, or 250 daltons. Examples of vinyl-containing cross-linking agents that can be used in the formulations of the invention disclosed herein include, without limitation, divinyl ethers, or divinyl sulfones, or triallyl isocyanurates (TAIC), and any combination thereof. Exemplary divinyl ethers include diethyleneglycol divinyl ether, or triethyleneglycol divinyl, or 1,4-butanediol divinyl ether, or 1,4-cyclohexanedimethanol divinyl ether, or any combination thereof. Typically, the vinyl-containing cross-linking agent can have two or three polymerizable vinyl groups. When present, the total amount of vinyl-containing cross-linking agent in the silicone hydrogel contact lens formulation is typically from about 0.02, 0.04, or 0.06 mol. % up to about 0.10, 0.15, or 0.20 mol. %. Examples of acrylate-containing cross-linking agents that can be used in the formulations of the invention disclosed herein, include, without limitation, lower alkylene glycol di(meth)acrylate, poly(lower alkylene) glycol di(meth)acrylate, lower alkylene di(meth)acrylate, trimethylolpropane tri(meth)acrylate, pentaerythritol tetra(meth)acrylate, bisphenol A di(meth)acrylate, methylenebis(meth)acrylamide, and 1,3-bis(3-methacryloxypropyl) tetramethyldisiloxane. In certain examples, the acrylate-containing cross-linking agent is a non-siloxane cross-linking agent. When present, the total amount of acrylate-containing cross-linking agent in the formulation of the invention is typically from about 0.20, 0.25, 0.30, or 0.35 mol. % up to about 0.50, 0.60, 0.70, 0.80, or 1.0 mol. %. For the avoidance of doubt, multi-functional polymerizable compounds having a molecular weight of more than 2,000 daltons are not considered to be cross-linking agents. Thus di-functional siloxanes as described herein having a molecular weight of more than 2,000 daltons are not considered to be cross-linking agents.

The formulations of the invention may optionally further comprise a chain transfer agent. Chain transfer is a polymerization reaction in which the activity of a growing polymer chain is transferred to another molecule, reducing the average molecular weight of the final polymer. Examples of chain transfer agents include, for example, thiol compounds, halocarbon compounds or C3-C5 hydrocarbons, such as allyloxy ethanol.

The formulations of the invention may comprise non-polymerizable ingredients, in addition to the polymerizable ingredients, that are conventionally used in contact lens formulations. Additional ingredients may also be included such as an organic solvent diluent. Non-limiting examples of these and additional ingredients that may be included in the polymerizable formulation are provided in US 2007/0296914. The formulations of the present invention may comprise no more than 2% (wt/wt) of non-polymerizable ingredients other than TPP, especially no more than 1% (wt/wt) of non-polymerizable ingredients other than TPP. In particular, the formulations of the present invention may comprise no more than 2% (wt/wt) of an organic solvent diluent, especially no more than 1% (wt/wt) of an organic solvent diluent.

Favoured formulations of the invention comprise a siloxane component present in an amount of at least 40% (wt/wt), wherein at least 50% of the siloxane content is di-functional siloxanes having a molecular weight of at least 5,000 Daltons; and an N-vinyl amide monomer component present in an amount of at least 30% (wt/wt). The contact lens of the second aspect of the invention favourably comprises a polymeric lens material derived from a favoured polymerizable formulation of the first aspect of the invention comprising monomers and siloxane components described above.

The formulations that are improved in the third aspect of the invention are advantageously those described above with respect to formulations of the other aspects of the invention. For example, the improved formulations in the third aspect of the invention may comprise any or all of the siloxane components, hydrophilic N-vinyl amide monomer(s), optional further hydrophilic monomers, optional further hydrophobic monomers, optional crosslinkers, optional chain transfer agents and optional radical initiators that are described above. Also for example, the improved formulations in the third aspect of the invention comprise siloxane components, hydrophilic N-vinyl amide monomer(s), optional further hydrophilic monomers and optional further hydrophobic monomers in the amounts described above with respect to formulations of the invention.

### EXAMPLES

The following Examples illustrate certain aspects and advantages of the present invention, which should be understood not to be limited thereby.

### Base formulations

Base polymerizable silicone hydrogel contact lens **formulation 1** was prepared containing:
- 11 wt.% hydrophobic monomers (consisting of 8.29 wt% hydroxybutyl methacrylate and 2.49 wt% isobornyl methacrylate),
- 42 wt.% hydrophilic *N*-vinyl amide monomers (consisting of 10.48 wt% *N*-vinyl *N-*methyl acetamide and 31.44 wt% *N*-vinyl pyrrolidone),
- 45 wt.% polymerizable siloxanes (with a varying ratio of monomers - as shown in Table 1),
- 2 wt.% of other agents including a thermal initiator (azobisisobutyronitrile (AIBN)) and a cross linker (triallyl isocyanate).

Base polymerizable silicone hydrogel contact lens **formulation 2** was prepared containing:
- 9 wt.% hydrophobic monomers (consisting of 9.94% hydroxybutyl methacrylate and 2.09% isobornyl methacrylate),
- 39 wt.% hydrophilic *N*-vinyl amide monomers (*N*-vinyl *N-*methyl acetamide),
- 49 wt.% polymerizable siloxanes, in a 62:38 ratio of high molecular weight, difunctional siloxane (30.23 wt% M5A, Mn 8,000 - 11,000) : low molecular weight, monofunctional siloxane (18.04 wt% FMM and 0.49wt% KF-1622 Mn <2,000),
- 3 wt.% of other agents including a thermal initiator (azobisisobutyronitrile (AIBN)) and a cross linker (triallyl isocyanate).

### Assessment of surface rippling

Rippling severity was assessed visually based on zonometer or SAG optimec images of the lens and rated from 0 to 5, using the following scale:
- 0 - no visible ripples.
- 1 - very minor, faint ripples.
- 2 - minor ripples.
- 3 - moderate ripples.
- 4 - severe ripples.
- 5 - very severe, long and deep ripples.

### Surface rippling without TPP

The following examples illustrate the severity of surface rippling that occurs in the PP moulds for the formulation, and how this can be mitigated by the inclusion of TPP.

The severity of surface ripples was investigated using polymerizable mixtures that combine base formulation 1, with a silicone content fixed at 46 parts by weight and different silicone ratios between M5A : KF-1622 and M5A : FMM. No TPP was included in the polymerizable mixtures and no further changes to the monomer formulations were made. All formulations were cast in identical PP moulds. The results are summarized in Table 1 below. The table shows that the severity of rippling increases with increased loading of M5A, with the most severe surface rippling exhibited by mixture 6, containing 75:25 M5A : FMM.

**Table 1.**

| **Mixture** | **Formulation** | **Silicone Mixture** | **Severity of rippling** |
|---|---|---|---|
| 1 | **Formulation 1** | M5A : KF-1622 (25:75) | 1 |
| 2 | **Formulation 1** | M5A : KF-1622 (50:50) | 2 |
| 3 | **Formulation 1** | M5A : KF-1622 (75:25) | 3 |
| 4 | **Formulation 1** | M5A : FMM (25:75) | 2 |
| 5 | **Formulation 1** | M5A : FMM (50:50) | 4 |
| 6 | **Formulation 1** | M5A : FMM (75:25) | 5 |
| 7 | **Formulation 1** | M3U : FMM (81:19) | 5 |

Severe rippling was also observed for lenses made from mixture 7 containing 81:19 M3U : FMM. In comparison Stenfilcon A lenses, comprising ~35% (wt/wt) silicone content containing 75:25 KF-1622 : M5A, and fanfilcon A lenses, comprising ~39% (wt/wt) silicone content containing 68:32 KF-1622 : M5A, made using the same process in PP moulds showed no ripples (0).

### Effect of TPP on surface rippling

Addition of TPP to the monomer formulation enabled contact lens manufacturing free from surface rippling. As the TPP loading is increased the degree of rippling observed is reduced.

TPP addition to base **formulation 2,** with an overall silicone content of 54 parts by weight made up of a formulation of 62:38 difunctional : monofunctional siloxanes, are shown in Table 2 below.

**Table 2.**

| **Mixture** | **Formulation** | **Weight percentage TPP** | **Severity of rippling** |
|---|---|---|---|
| 9 | **Formulation 2** | 0.000% | 3 |
| 10 | **Formulation 2** | 0.091% | 3 |
| 11 | **Formulation 2** | 0.181% | 2 |
| 12 | **Formulation 2** | 0.271% | 1 |
| 13 | **Formulation 2** | 0.404% | 0 |

The table shows that the severity of rippling decreases with increased loading of TPP. When no TPP is included (mixture 9), the rippling is at its most prominent. When 0.404% TPP is included (mixture 13), the rippling is mitigated to such an extent that it can no longer be observed visually.

## Claims

1. A silicone hydrogel contact lens formulation comprising:
a. at least 40% (wt/wt) of a polymerizable siloxane component, wherein at least 50% (wt/wt) of the polymerizable siloxane content is di-functional siloxane having a molecular weight of at least 5,000 daltons;
b. at least 30% (wt/wt) of hydrophilic N-vinyl amide monomer(s); and
c. at least 0.10 % (wt/wt) triphenylphosphine (TPP).

2. The formulation of claim 1, comprising from 35 to 50% (wt/wt) of *N*-methyl *N*-vinyl acetamide monomer(s) and/or comprising at least 37% (wt/wt) of *N*-vinyl amide monomer(s).

3. The formulation of any preceding claim, wherein the polymerizable siloxane component is present in an amount of at least 45% (wt/wt).

4. The formulation of any preceding claim, wherein at least 50% (wt/wt) of the polymerizable siloxane content is di-functional siloxane(s) having a molecular weight of at least 8,000 daltons, and/or wherein the formulation comprises from 20 to 40% (wt/wt) of di-functional, (meth)acrylate-containing siloxane(s) having a molecular weight of at least 8,000 daltons.

5. The formulation of any preceding claim, wherein from 20 to 50 % (wt/wt) of the polymerizable siloxane content is mono-functional siloxanes having a molecular weight of less than 3000 daltons, and/or wherein the formulation comprises from 10 to 30 % (wt/wt) of mono-functional, (meth)acrylate-containing siloxane(s) having a molecular weight of less than 3000 daltons.

6. The formulation of any preceding claim, further comprising:
d. non-siloxane hydrophobic monomer(s), especially hydrophobic methacrylate monomer(s).

7. The formulation of claim 6, wherein the non-siloxane hydrophobic monomer(s) include or consist of hydroxybutyl methacrylate, isobornyl methacrylate or a combination of hydroxybutyl methacrylate and isobornyl methacrylate.

8. The formulation of claim 6 or claim 7, wherein at least 5% (wt/wt) of the formulation is non-siloxane hydrophobic monomer(s).

9. The formulation of any preceding claim, comprising TPP in an amount of from 0.2 % to 2.0% (wt/wt).

10. The formulation of claim 1, comprising:
a1. di-functional, (meth)acrylate-containing siloxanes having a molecular weight of at least 8,000 daltons in an amount of from 20 to 40% (wt/wt);
a2. mono-functional, (meth)acrylate-containing siloxanes having a molecular weight of less than 3000 daltons in an amount of from 10 to 30 (wt/wt);
b. N-methyl N-vinyl acetamide in an amount of from 37 to 50% (wt/wt);
c. at least 0.2% (wt/wt) TPP; and
d. at least 5% (wt/wt) of hydroxybutyl methacrylate, isobornyl methacrylate or a combination of hydroxybutyl methacrylate and isobornyl methacrylate.

11. The formulation of any preceding claim, wherein the polymerizable siloxane component includes a di-functional (meth)acrylate-containing siloxane monomer represented by formula (III), 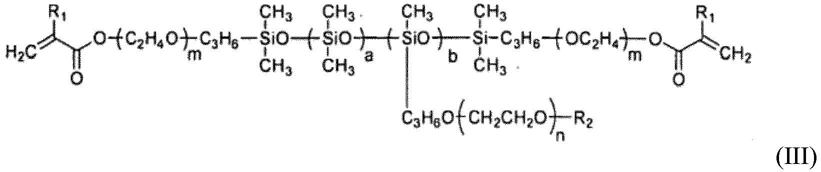 wherein R₁ is selected from either hydrogen or a methyl group; R₂ is selected from either hydrogen or a C₁₋₄ hydrocarbon group; m represents an integer of from 0 to 10; n represents an integer of from 4 up to about 15, 25, or 100; a and b represent integers of 1 or more; a+b is equal to 20-500; b/(a+b) is equal to 0.01-0.22; and the configuration of siloxane units includes a random configuration.

12. The formulation of any preceding claim, wherein the polymerizable siloxane component includes a mono-functional methacrylate-containing siloxane monomer represented by formula (II), 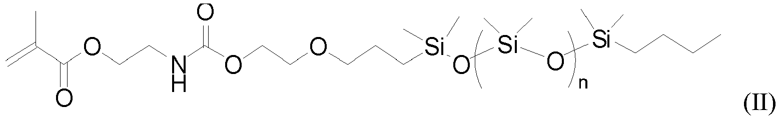 where n is an integer from about 10 to 15.

13. A hydrogel or silicone hydrogel contact lens obtained from the polymerization of the formulation of any preceding claim.

14. The use of TPP to improve the surface properties of a contact lens prepared from a formulation comprising:
a. at least 40% (wt/wt) of a polymerizable siloxane component, wherein at least 50% (wt/wt) of the polymerizable siloxane content is di-functional siloxanes having a molecular weight of at least 5,000 daltons, and wherein at least 20% (wt/wt) of the polymerizable siloxane content is mono-functional siloxanes having a molecular weight of less than 3000 daltons; and
b. at least 30% (wt/wt) of hydrophilic N-vinyl amide monomer(s).

15. The use of claim 14, wherein the formulation is as further defined in any one of claims 2 to 12.

## Patentansprüche

1. Silikon-Hydrogel-Kontaktlinsenformulierung, umfassend:
a. mindestens 40% (Gew./Gew.) einer polymerisierbaren Siloxankomponente, wobei mindestens 50% (Gew./Gew.) des polymerisierbaren Siloxangehalts difunktionelles Siloxan mit einem Molekulargewicht von mindestens 5.000 Dalton ist;
b. mindestens 30% (Gew./Gew.) hydrophile(s) N-Vinylamid-Monomer(e); und
c. mindestens 0,10% (Gew./Gew.) Triphenylphosphin (TPP).

2. Formulierung nach Anspruch 1, umfassend 35 bis 50% (Gew./Gew.) N-Methyl-N-vinylacetamid-Monomer(e) und/oder umfassend mindestens 37% (Gew./Gew.) N-Vinylamid-Monomer(e).

3. Formulierung nach einem der vorstehenden Ansprüche, wobei die polymerisierbare Siloxankomponente in einer Menge von mindestens 45% (Gew./Gew.) enthalten ist.

4. Formulierung nach einem der vorstehenden Ansprüche, wobei mindestens 50% (Gew./Gew.) des polymerisierbaren Siloxangehalts difunktionelles(n) Siloxan(e) mit einem Molekulargewicht von mindestens 8.000 Dalton sind und/oder wobei die Formulierung 20 bis 40% (Gew./Gew.) difunktionelles(s), (Meth)acrylat-haltiges(s) Siloxan(e) mit einem Molekulargewicht von mindestens 8.000 Dalton umfasst.

5. Formulierung nach einem der vorstehenden Ansprüche, wobei 20 bis 50% (Gew./Gew.) des polymerisierbaren Siloxangehalts monofunktionelle Siloxane mit einem Molekulargewicht von weniger als 3000 Dalton sind, und/oder wobei die Formulierung 10 bis 30 %(Gew./Gew.) monofunktionelle, (Meth)acrylat-haltige(s) Siloxan(e) mit einem Molekulargewicht von weniger als 3000 Dalton umfasst.

6. Formulierung nach einem der vorstehenden Ansprüche, die weiterhin Folgendes umfasst:
d. nicht-siloxanhaltige(s) hydrophobe(s) Monomer(e), insbesondere hydrophobe(s) Methacrylatmonomer(e).

7. Formulierung nach Anspruch 6, wobei das/die nicht-siloxanhaltige(n) hydrophobe(n) Monomer(e) Hydroxybutylmethacrylat, Isobornylmethacrylat oder eine Kombination aus Hydroxybutylmethacrylat und Isobornylmethacrylat umfasst/umfassen oder daraus besteht/bestehen.

8. Formulierung nach Anspruch 6 oder Anspruch 7, wobei mindestens 5% (Gew./Gew.) der Formulierung nicht-siloxanhaltige(s) hydrophobe(s) Monomer(e) ist/sind.

9. Formulierung nach einem der vorstehenden Ansprüche, umfassend TPP in einer Menge von 0,2% bis 2,0% (Gew./Gew.).

10. Formulierung nach Anspruch 1, umfassend:
a1.difunktionelle, (meth)acrylat-haltige Siloxane mit einem Molekulargewicht von mindestens 8.000 Dalton in einer Menge von 20 bis 40% (Gew./Gew.);
a2. monofunktionelle, (Meth)acrylat-haltige Siloxane mit einem Molekulargewicht Gewicht von weniger als 3000 Dalton in einer Menge von 10 bis 30 % (Gew./Gew.);
b. *N*-Methyl-*N*-vinylacetamid in einer Menge von 37 bis 50% (Gew./Gew.);
c. mindestens 0,2% (Gew./Gew.) TPP; und
d. mindestens 5% (Gew./Gew.) Hydroxybutylmethacrylat, Isobornylmethacrylat oder eine Kombination aus Hydroxybutylmethacrylat und Isobornylmethacrylat.

11. Formulierung eines beliebigen vorhergehenden Anspruchs, wobei die polymerisierbare Siloxankomponente ein difunktionelles (Meth)acrylat-haltiges Siloxanmonomer der Formel (III) enthält: 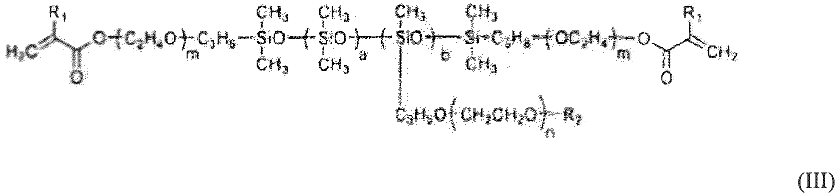 wobei R₁ entweder aus Wasserstoff oder einer Methylgruppe ausgewählt ist; R₂ entweder aus Wasserstoff oder einer C₁₋₄-Kohlenwasserstoffgruppe ausgewählt ist; m eine ganze Zahl von 0 bis 10 darstellt; n eine ganze Zahl von 4 bis etwa 15, 25 oder 100 darstellt; a und b ganze Zahlen von 1 oder mehr darstellen; a+b gleich 20-500 ist; b/(a+b) gleich 0,01 bis 0,22 ist; und die Konfiguration der Siloxaneinheiten eine zufällige Konfiguration umfasst.

12. Formulierung nach einem der vorstehenden Ansprüche, wobei die polymerisierbare Siloxankomponente ein monofunktionelles methacrylat-haltiges Siloxanmonomer umfasst, das durch die Formel (II) dargestellt wird, 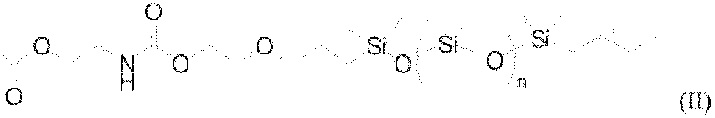 wobei n eine ganze Zahl von etwa 10 bis 15 ist.

13. Hydrogel- oder Silikonhydrogel-Kontaktlinse, die durch Polymerisation der Formulierung nach einem der vorstehenden Ansprüche erhalten wird.

14. Verwendung von TPP zur Verbesserung der Oberflächeneigenschaften einer Kontaktlinse, die aus einer Formulierung hergestellt wurde, die umfasst:
a. mindestens 40 % (Gew./Gew.) einer polymerisierbaren Siloxankomponente, wobei mindestens 50 % (Gew./Gew.) des polymerisierbaren Siloxangehalts difunktionelle Siloxane mit einem Molekulargewicht von mindestens 5000 Dalton sind und wobei mindestens 20 % (Gew./Gew.) des polymerisierbaren Siloxangehalts monofunktionelle Siloxane mit einem Molekulargewicht von weniger als 3000 Dalton sind; und
b. mindestens 30 % (Gew./Gew.) eines oder mehrerer hydrophiler *N*-Vinylamid-Monomere.

15. Verwendung nach Anspruch 14, wobei die Formulierung ferner wie in einem der Ansprüche 2 bis 12 näher definiert ist.

## Revendications

1. Formulation de lentille de contact en hydrogel de silicone, comprenant :
a. au moins 40 % (en poids/poids) d'un composant siloxane polymérisable, au moins 50 % (en poids/poids) de la teneur en siloxane polymérisable consistant en siloxane difonctionnel ayant un poids moléculaire d'au moins 5 000 daltons ;
b. au moins 30 % (en poids/poids) de monomère(s) *N*-vinylamide hydrophile(s) ; et
c. au moins 0,10 % (en poids/poids) de triphénylphosphine (TPP).

2. Formulation selon la revendication 1, comprenant 35 à 50 % (en poids/poids) de monomère(s) *N*-méthyl-*N*-vinylacétamide et/ou comprenant au moins 37 % (en poids/poids) de monomère(s) *N*-vinylamide.

3. Formulation selon une quelconque revendication précédente, dans laquelle le composant siloxane polymérisable est présent en une quantité d'au moins 45 % (en poids/poids).

4. Formulation selon une quelconque revendication précédente, dans laquelle au moins 50 % (en poids/poids) de la teneur en siloxane polymérisable consistent en siloxane(s) difonctionnel(s) ayant un poids moléculaire d'au moins 8 000 daltons, et/ou la formulation comprenant 20 à 40 % (en poids/poids) de siloxane(s) difonctionnel(s) contenant du (méth)acrylate ayant un poids moléculaire d'au moins 8 000 daltons.

5. Formulation selon une quelconque revendication précédente, dans laquelle 20 à 50 % (en poids/poids) de la teneur en siloxane polymérisable consistent en siloxanes monofonctionnels ayant un poids moléculaire inférieur à 3 000 daltons, et/ou la formulation comprenant 10 à 30 % (en poids/poids) de siloxane(s) monofonctionnel(s) contenant du (méth)acrylate ayant un poids moléculaire inférieur à 3 000 daltons.

6. Formulation selon une quelconque revendication précédente, comprenant en outre :
d. un ou plusieurs monomères hydrophobes ne consistant pas en siloxanes, en particulier un ou plusieurs monomères méthacrylate hydrophobes.

7. Formulation selon la revendication 6, dans laquelle les un ou plusieurs monomères hydrophobes ne consistant pas en siloxanes comprennent ou consistent en méthacrylate d'hydroxybutyle, méthacrylate d'isobornyle ou une combinaison de méthacrylate d'hydroxybutyle et de méthacrylate d'isobornyle.

8. Formulation selon la revendication 6 ou la revendication 7, dans laquelle au moins 5 % (en poids/poids) de la formulation consistent en un ou plusieurs monomères hydrophobes ne consistant pas en siloxanes.

9. Formulation selon une quelconque revendication précédente, comprenant de la TPP en une quantité de 0,2 % à 2,0 % (en poids/poids).

10. Formulation selon la revendication 1, comprenant :
a1. des siloxanes difonctionnels contenant un (méth)acrylate ayant un poids moléculaire d'au moins 8 000 daltons en une quantité de 20 à 40 % (en poids/poids) ;
a2. des siloxanes monofonctionnels contenant un (méth)acrylate ayant un poids moléculaire inférieur à 3 000 daltons en une quantité de 10 à 30 % (en poids/poids) ;
b. du *N*-méthyl-*N*-vinylacétamide en une quantité de 37 à 50 % (en poids/poids) ;
c. au moins 0,2 % (en poids/poids) de TPP ; et
d. au moins 5 % (en poids/poids) de méthacrylate d'hydroxybutyle, de méthacrylate d'isobornyle ou d'une combinaison de méthacrylate d'hydroxybutyle et de méthacrylate d'isobornyle.

11. Formulation selon une quelconque revendication précédente, dans laquelle le composant siloxane polymérisable comprend un monomère siloxane difonctionnel contenant un (méth)acrylate représenté par la formule (III), 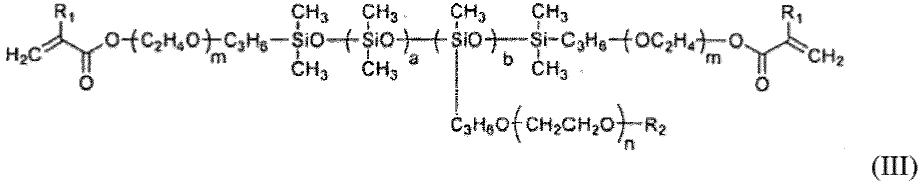 dans laquelle R₁ est choisi parmi soit l'hydrogène soit un groupe méthyle ; R₂ est choisi parmi soit l'hydrogène soit un groupe hydrocarboné en C₁ à C₄ ; m représente un nombre entier de 0 à 10 ; n représente un nombre entier de 4 jusqu'à environ 15, 25 ou 100 ; a et b représentent des nombres entiers supérieurs ou égaux à 1 ; a+b est égal à 20-500 ; b/(a+b) est égal à 0,01-0,22 ; et la configuration des motifs siloxane comprend une configuration aléatoire.

12. Formulation selon une quelconque revendication précédente, dans laquelle le composant siloxane polymérisable comprend un monomère siloxane monofonctionnel contenant un méthacrylate représenté par la formule (II), 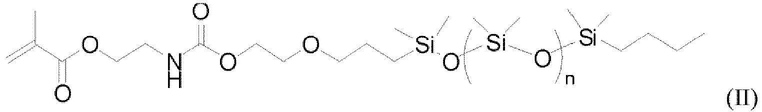 où n est un entier d'environ 10 à 15.

13. Lentille de contact en hydrogel ou hydrogel de silicone obtenue à partir de la polymérisation de la formulation selon une quelconque revendication précédente.

14. Utilisation de TPP pour améliorer les propriétés de surface d'une lentille de contact préparée à partir d'une formulation comprenant :
a. au moins 40 % (en poids/poids) d'un composant siloxane polymérisable, au moins 50 % (en poids/poids) de la teneur en siloxane polymérisable consistant en siloxanes difonctionnels ayant un poids moléculaire d'au moins 5 000 daltons, et au moins 20 % (en poids/poids) de la teneur en siloxane polymérisable consistant en siloxanes monofonctionnels ayant un poids moléculaire inférieur à 3 000 daltons ; et
b. au moins 30 % (en poids/poids) de monomère(s) *N*-vinylamide hydrophile(s).

15. Utilisation selon la revendication 14, dans laquelle la formulation est telle que définie plus en détail dans l'une quelconque des revendications 2 à 12.
